Europäisches Patentamt

European Patent Office

Office européen des brevets

(11) Numéro de publication : **0 101 970**
**B1**

(12)                          **FASCICULE DE BREVET EUROPÉEN**

(45) Date de publication du fascicule du brevet :
04.03.87

(51) Int. Cl.⁴ : **G 02 B   6/44**

(21) Numéro de dépôt : 83107609.6

(22) Date de dépôt : 02.08.83

(54) **Tête de câble optique.**

(30) Priorité : 04.08.82 FR 8213627

(43) Date de publication de la demande :
07.03.84 Bulletin 84/10

(45) Mention de la délivrance du brevet :
04.03.87 Bulletin 87/10

(84) Etats contractants désignés :
BE DE FR GB IT LU NL SE

(56) Documents cités :
DE-A- 3 118 173
GB-A- 2 098 354
US-A- 4 217 030
US-A- 4 266 853

(73) Titulaire : **ALCATEL**
**12, rue de la Baume**
**F-75008 Paris (FR)**

(72) Inventeur : **Pinsard, Jean-Jacques**
**12, rue Louise Michelle**
**F-91270 Vigneux Sur Seine (FR)**
Inventeur : **Roger, Jacques**
**Résidence Saint-Germain 28, rue de Savigny**
**F-91390 Morsang sur Orge (FR)**

(74) Mandataire : **Weinmiller, Jürgen et al**
**Lennéstrasse 9**
**D-8133 Feldafing (DE)**

## Description

La présente invention porte sur le raccordement entre fibres optiques. Elle porte plus spécifiquement sur un ensemble optique appelé tête de câble optique destiné à permettre un raccordement optique, avantageusement par simple enfichage, sur les fibres individuelles d'un câble optique.

Une telle tête de câble peut alors être utilisée dans tous les cas de raccordement optique démontable à réaliser sur un câble optique, par exemple entre tout ou partie des fibres individuelles de deux câbles. Elle peut être utilisée tout particulièrement dans les systèmes de transmission téléphonique par câble optique pour assurer, au moyen de structures identiques, un raccordement individuel des fibres du câble de ligne sur des sous-ensembles optiques tels que répéteur-régénérateurs optiques de stations intermédiaires ou sur des sous-ensembles électro-optiques de stations terminales, tout en permettant à volonté une liaison directe entre fibres de deux tronçons de câble ou un raccordement temporaire et individuel des fibres du câble sur des sous-ensembles de mesure et de test de ces stations.

D'une manière générale, un raccordement optique entre deux fibres peut être effectué par assemblage d'embouts de connexion équipant les extrémités des fibres. Dans chaque embout de connexion la face frontale de la fibre rectifiée est positionnée convenablement pour assurer une connexion optique précise lors de l'assemblage de deux embouts. Un moyen de positionnement de l'extrémité de la fibre est décrit dans le brevet français publié sous le n° 2 275 787 et son certificat d'addition publié sous le numéro 2 316 611. Ce moyen de positionnement met en œuvre un jeu de trois tiges cylindriques maintenues en contact avec la fibre positionnée dans le canal interne qu'elles définissent entre elles. Pour le raccordement de plusieurs fibres d'un câble avec les fibres d'un autre câble, ce moyen de positionnement est constitué par un ensemble de tiges maintenues serrées les unes contre les autres et contre une tige centrale, les fibres étant positionnées respectivement dans les canaux définis entre la tige centrale et les tiges périphériques. Le raccordement entre fibres individuelles des câbles est alors assuré simultanément par assemblage de deux embouts de câble comportant ce moyen de positionnement de leurs fibres.

Ces embouts de câbles optiques ne permettent qu'un raccordement simultané entre les différentes fibres de deux câbles identiques. Ils rendent impossibles des raccordements réalisés individuellement sur chacune des fibres qui permettraient d'effectuer, selon les besoins, une liaison entre tout ou partie des fibres d'un câble avec celles correspondantes d'un autre câble ou un traitement, tel que régénération ou conversion opto-électrique des informations véhiculées par les fibres individuelles, ou encore des mesures et tests sur ces mêmes fibres. De plus, dans une liaison réalisée entre deux câbles à partir de ces embouts, une défectuosité dans l'une des liaisons entre deux fibres met en cause l'ensemble des liaisons entre les autres paires de fibres pendant la durée de la réparation. Cette réparation de la liaison défectueuse est elle-même difficile et même souvent impossible à réaliser sur les seules fibres concernées et nécessite en général un nouveau montage d'embout sur l'ensemble des fibres de l'un des câbles alors sectionné.

La présente invention a pour but, en évitant les inconvénients cités, de permettre, au moyen d'une même structure appelée tête de câble optique, de venir réaliser le raccordement de chacune des fibres de ce câble sur l'appareillage convenable ou sur une fibre d'un autre câble, ceci donc indépendamment des raccordements réalisés ou à réaliser sur les autres fibres de ce même câble.

La présente invention a donc pour objet une tête de câble optique destinée à permettre un raccordement optique sur les fibres individuelles d'un câble optique, par assemblage d'un embout de connexion monté sur chaque fibre du câble avec un autre embout de connexion d'une fibre extérieure, caractérisée en ce qu'elle comporte une pluralité de supports de connecteur optique ayant chacun un corps allongé formé d'un doigt creux équipé, à une extrémité, d'une pièce de raccordement optique d'une paire d'embouts de connexion et flanqué d'un support de lovage pour l'une des fibres dudit câble dont l'embout de connexion est raccordé à l'intérieur du doigt à ladite pièce de raccordement, et un boîtier-chargeur comportant une pluralité de cavités individuelles pour chacun desdits supports de connecteur optique dont les pièces de raccordement constituent, dans l'une de ses faces, dite face avant, des prises optiques sur les fibres individuelles dudit câble.

Les caractéristiques et avantages de l'invention apparaîtront plus clairement au cours de la description donnée ci-après d'un mode de réalisation illustré dans le dessin ci-joint dans lequel :

la figure 1 est une vue en perspective partiellement éclatée et partiellement arrachée de la tête de câble optique selon l'invention,

la figure 2 est une vue de côté avec arrachements partiels du boîtier chargeur de la tête de câble de la figure 1,

les figures 3 et 4 sont deux vues, de la face avant et de la face arrière du boîtier-chargeur de la figure 2, données selon la flèche III et la ligne brisée IV-IV de cette figure 2,

les figures 5 et 6 sont deux vues du même boîtier-chargeur, selon la ligne V-V et la flèche VI de la figure 2, la figure 6 étant en coupe partielle,

la figure 7 est une vue en perspective de l'un des supports de connecteur optique de la tête de câble de la figure 1,

la figure 8 est une vue de côté de ce support de connecteur optique de la figure 7,

la figure 9 est une vue de dessous du support de connecteur optique selon la flèche IX de la figure 8,

les figures 10 et 11 sont deux vues du support de connecteur optique, selon la ligne X-X et la flèche XI de la figure 9,

la figure 12 est une vue en coupe partielle illustrant le boîtier-chargeur de la figure 2 avec l'un des supports de connecteur optique verrouillé dans son logement et un autre support du même type à peine engagé dans son logement.

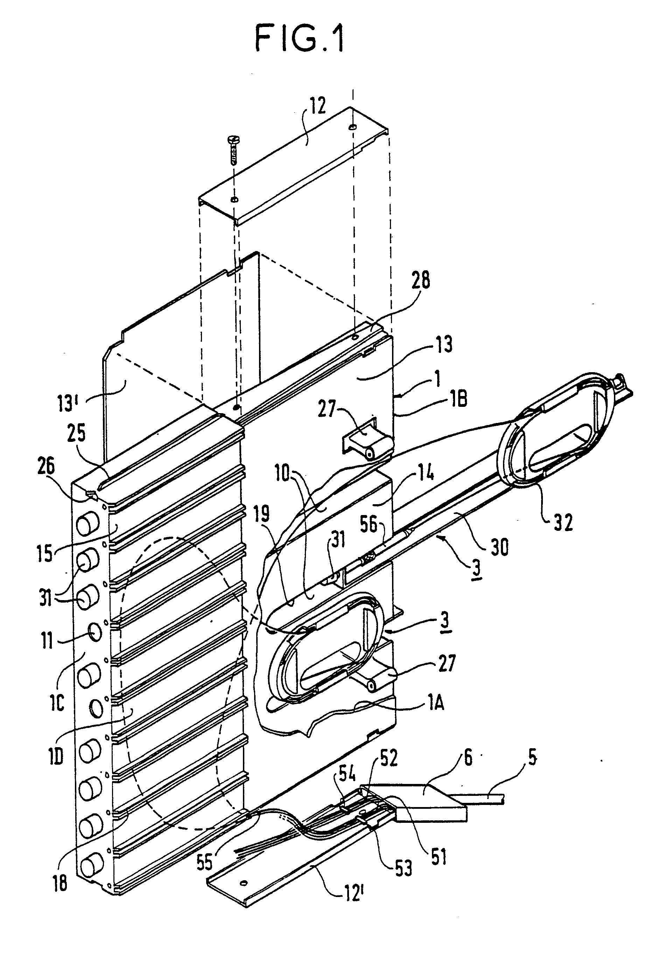

La tête optique illustrée dans la figure 1 comporte, montée dans un boîtier-chargeur 1, une pluralité de supports de connecteur optique identiques, tels que les deux supports de connecteur 3 visibles au niveau de l'arrachement repéré 1A pratiqué dans l'une des parois du boîtier-chargeur, l'un de ces deux supports de connecteur étant totalement engagé dans son logement du boîtier-chargeur et l'autre presque totalement hors de son logement.

En regard du support de connecteur optique 3 représenté à peine engagé dans son logement du boîtier-chargeur 1, on voit que ce support de connecteur a un corps allongé formé d'un doigt creux 30. Ce doigt porte une pièce de raccordement 31 de forme cylindrique, montée au bout du doigt et est flanqué, à l'extrémité opposée, d'un support latéral 32 de lovage d'une longueur de fibre optique.

Le boîtier-chargeur 1 a la forme générale d'un parallélépipède rectangle plat comportant une rangée de cavités telles que les deux cavités 10 visibles dans la partie arrachée, l'une de ces deux cavités étant celle servant de logement au support de connecteur optique représenté à peine engagé et l'autre au-dessus étant libre de tout support de ce type. Ces cavités sont ouvertes sur la face arrière repérée 1B du boîtier pour le montage des supports de connecteur optique qu'elles reçoivent ; elles débouchent sur la face avant repérée 1C en des ouvertures circulaires 11, visibles pour les deux cavités visibles précitées, destinées à recevoir les pièces de raccordement 31 des supports de connecteur optique en place dans leur logement.

Dans la réalisation illustrée, le boîtier-chargeur peut recevoir dix supports de connecteur optique et comporte en conséquence dix cavités pour leur logement.

Le câble optique sur lequel est montée cette tête est illustré en 5. Dans la réalisation donnée, ce câble est un câble à dix fibres, il est du type à ruban plat ou jonc cylindrique ou à fibres indépendantes. Ce câble dégainé traverse un manchon ou boîtier plat 6, les fibres individuelles ou issues d'un jonc ou de rubans, alors libres, y sont regainées puis séparées en deux jeux identiques de cinq fibres 51 et 52 et fixées en 53 et 54 sur une plaque 12' de recouvrement partiel du fond du boîtier-chargeur 1 où entrent les fibres regainées telles que 55. Cette plaque de fond 12' ou, en variante équivalente, une plaque identique 12 de recouvrement partiel du dessus du boîtier-chargeur 1, définit sur le boîtier-chargeur l'entrée des dix fibres 55, appartenant ou reliées à celles du câble, qui se présentent en deux ensembles distincts de cinq fibres individuelles. Cette entrée des fibres dans le boîtier-chargeur 1 est indépendante de ses dix cavités.

Dans la figure 1, pour la netteté du dessin seules deux des fibres 55 ont été reliées aux deux supports de connecteur optique visibles, tandis que les autres ont été volontairement sectionnées.

L'extrémité libre de chacune des fibres 55 est équipée d'un embout de connexion 56 visible sur la fibre montée dans le support de connecteur optique représenté à peine engagé dans son logement. Cet embout 56, étant en tant que tel de type connu, ne sera pas décrit en détail ; il sera par exemple du type à trois tiges de positionnement de l'extrémité de la fibre individuelle qu'il reçoit, tel que cité dans le préambule de la présente demande, ou d'un autre type équivalent.

Depuis leur entrée dans le boîtier-chargeur 1, les fibres 55 des deux ensembles s'étendent en boucle libre latéralement dans le boîtier-chargeur, dans l'une et l'autre de ses deux grandes faces latérales telles que celle visible et repérée 1D, et sont lovées sur une longueur souhaitée, par exemple de 1 à 2 mm, sur le support latéral de lovage 32 des supports de connecteur optique, respectivement. Chacune des portions terminales des fibres 55 est alors engagée, depuis le support de lovage 32, dans le doigt creux 30 du support de connecteur optique concerné, tandis que l'embout de connexion 56 qui l'équipe s'enfiche dans la pièce de raccordement 31 montée en bout du doigt de ce support de connecteur.

Une fois le support de connecteur optique en place dans son logement, c'est sa pièce de raccordement 31, déjà connectée à l'embout de l'une des fibres, côté intérieur au doigt, qui déborde sur la face avant 1C du boîtier-chargeur 1. Cette pièce de raccordement est ainsi prête à recevoir par enfichage un embout terminal d'une fibre extérieure (non illustrée) appartenant à un autre câble ou formant une entrée ou une sortie d'un appareillage adéquat, pour leur connexion. Les pièces de raccordement 31 constituent donc sur la face avant du boîtier des prises optiques sur les fibres individuelles du câble 5.

Deux plaques 13 et 13' de recouvrement partiel des grandes faces latérales du boîtier-chargeur viennent recouvrir les supports de lovage 32 des supports de connecteur optique et assurent la présentation finale de la tête de câble sous forme d'un boîtier classique d'appareillage. Ces plaques 13 et 13' sont maintenues par les plaques de fond et de dessus 12' et 12 à rebords repliés qui seront fixées par vis sur le boîtier-chargeur.

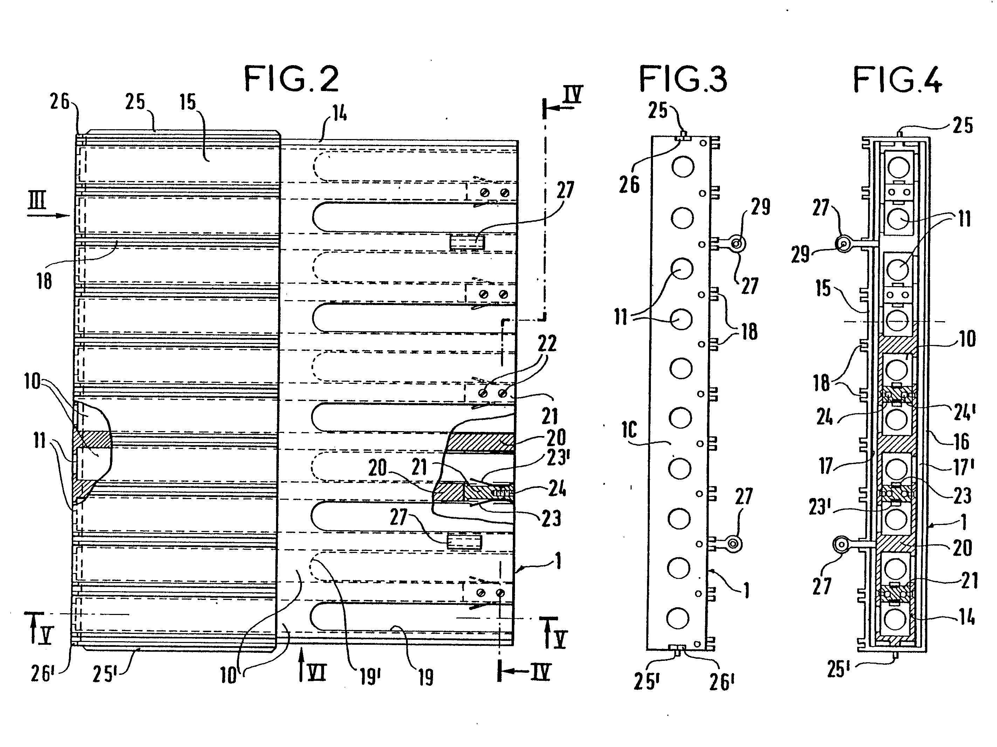

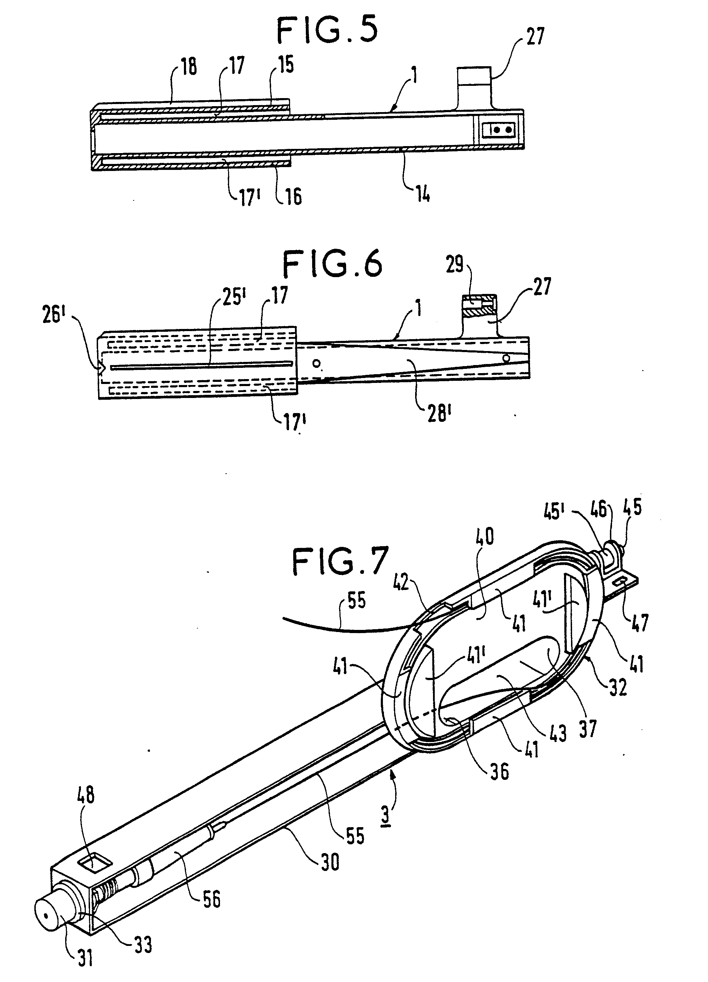

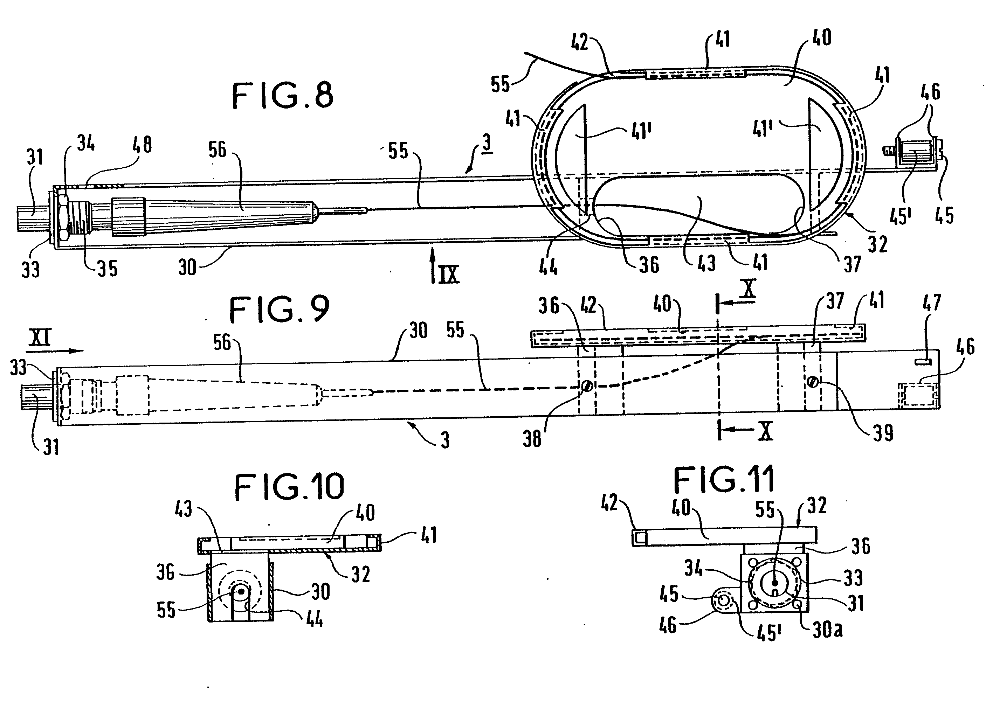

La description de la tête de câble optique est complétée en se référant à cette figure 1 ou plus particulièrement aux figures 2 à 6 en ce qui concerne le boîtier-chargeur 1 représenté sans ses supports de connecteur optique et aux figures 7 à 11 en ce qui concerne l'un quelconque des supports de connecteur optique 3.

En regard des figures 1, 2 ou 5 notamment, on voit que le boîtier-chargeur 1 est formé par un

corps principal 14 ayant la forme d'un parallélépipède rectangle dans lequel est pratiquée la rangée de cavités 10. Ce corps principal 14 est muni,
sensiblement sur la moitié avant, de deux flasques
latéraux 15 et 16 s'étendant à l'extérieur, sur sa
hauteur et sensiblement sur la moitié de sa
longueur, depuis sa face avant 1C. Ces flasques
ménagent, entre eux et le corps principal 14, deux
ouïes latérales 17 et 17', servant de logements à
l'un et l'autre des deux ensembles de fibres
individuelles s'étendant en boucle libre entre leur
entrée dans le boîtier-chargeur 1 et le support de
lovage des supports de connecteur optique qui
reçoivent ces fibres.

Pour chacun des supports de connecteur optique, le support de lovage 32 vient se positionner à
l'extérieur du corps principal du boîtier-chargeur
contre l'une ou l'autre de la moitié arrière de ses
grandes parois latérales telles que 1D. Les cavités
10 ouvertes sur la face arrière 1B sont de ce fait
également ouvertes en des fenêtres oblongues 19
ou 19' pratiquées depuis la face arrière 1B dans
les parties des grandes parois latérales 1D du
corps 14, non recouvertes par les flasques 15 et
16. Pour la rangée de cavités 10, ces fenêtres 19,
19' sont pratiquées alternativement sur l'une et
l'autre de ces grandes faces latérales 1D respectivement ; les supports de connecteur optique 3
chargés dans les cavités successives seront donc
alternativement retournés de 180° de sorte que
les supports de lovage 32 occupent, sur les
surfaces latérales du boîtier sensiblement le double de la hauteur qui pourrait normalement leur
être affectée en l'absence de retournement d'un
support de connecteur optique sur deux.

Cette disposition donne la possibilité de lovage
des fibres individuelles avec un rayon de courbure
compatible avec les exigences de transmission
d'information, sans pour autant aboutir à une tête
de câble optique de hauteur exagérée. On précise,
que dans le mode de réalisation, les supports de
connecteur optique montés dans le boîtier-chargeur 1 sont disposés au pas de 42,5 mm et
qu'aucun rayon de courbure des fibres individuelles sur leur support de lovage n'est inférieur à
40 mm.

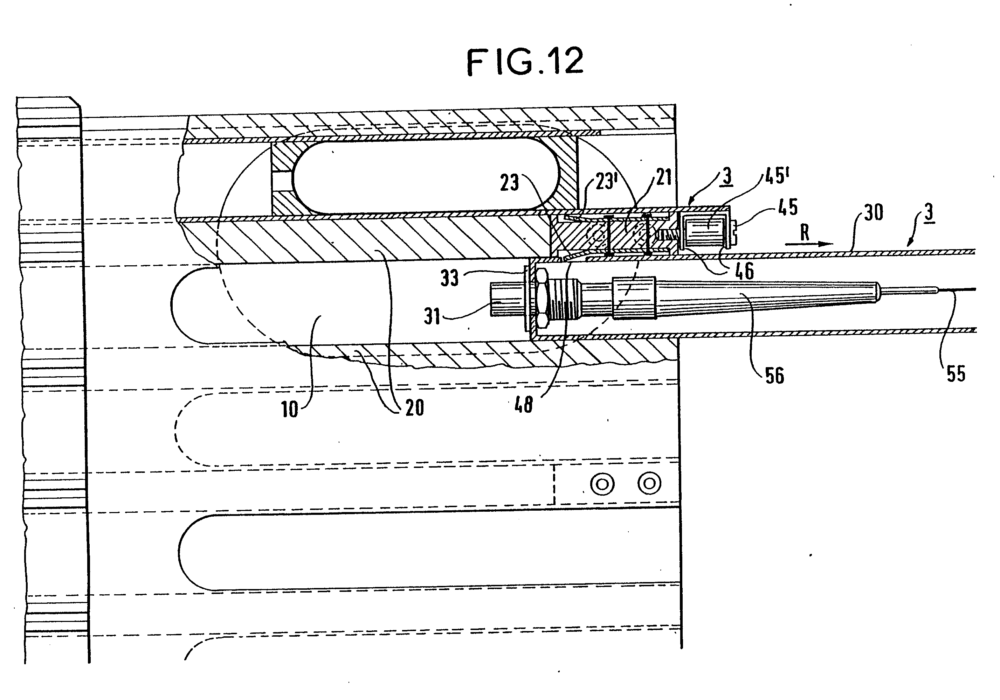

Dans le corps principal 14 du boîtier-chargeur,
les cavités 10 sont de section pratiquement identique à celle des doigts 30 des supports de connecteur optique qui viennent par glissement s'y
loger. En regard des figures 2 et 4 notamment on
voit que ces cavités 10 sont séparées les unes des
autres par des cloisons internes 20, les parois
inférieure et supérieure du corps principal limitant
les cavités extrêmes de la rangée. Les cloisons
internes 20 sont alternativement issues en totalité
ou en partie d'usinage du corps principal 14. Une
de ces cloisons sur deux s'étend d'un seul tenant
depuis la face avant du boîtier-chargeur 1 jusqu'à
sa face arrière tandis que les autres cloisons ne
s'étendent que jusqu'à proximité de cette face
arrière et sont associées à des pièces rapportées
21 fixées par des paires de vis ou rivets 22 sur les
grandes parois latérales du boîtier-chargeur. Chacune des pièces rapportées 21 est équipée d'une paire de lames élastiques 23, 23' venant s'étendre
dans l'une et l'autre des deux cavités que sépare
la cloison concernée, notamment en l'absence de
supports de connecteur optique dans ses cavités.
Selon les figures 2 et 4, on voit que cinq des neufs
cloisons internes 20 présentent une telle pièce
rapportée 21. Ainsi chacune des dix cavités a sa
lame élastique qui normalement s'étend à l'intérieur de la cavité en l'absence de support de
connecteur optique, cette lame venant se rabattre
contre la pièce 21 qui la porte lors de la mise en
place dudit support. Le rôle de ces lames élastiques 23, 23' sera donné ultérieurement en regard
de la figure 12.

Ces pièces rapportées 21 sont en outre munies
d'une paire de trous taraudés 24 ou 24'. Ces trous
taraudés serviront à la fixation finale par vis ou
verrouillage des deux supports de connecteur
optique logés dans les deux cavités séparées par
la cloison comportant la pièce rapportée 21 considéré, ainsi qu'il sera indiqué plus clairement ci-
après.

En regard des figures 1 et 2, mais plus particulièrement des figures 3, 4 et 5, on voit que l'un des
flasques 15 du boîtier-chargeur définit une rangée
de guides, ici sous forme de glissières externes
profilées en creux telles que 18, qui correspond à
la rangée de supports de connecteur logés dans
les cavités 10. Ces glissières seront avantageusement utilisées pour le maintien et le positionnement de boîtiers d'appareillage à raccorder sur la
tête de câle optique.

Dans l'exemple choisi la tête de câble optique
comportera sur le flasque 15 onze glissières 18
pour les dix supports de connecteur optique
possibles logés dans les dix cavités. Cette disposition permet de n'équiper de glissières qu'un seul
des flasques 15 et 16 tout en permettant un
accrochage de boîtiers d'appareillage à gauche
ou à droite de la tête de câble, par simple
retournement de cette dernière.

En regard de ces mêmes figures ou de la figure
6, on voit que la moitié avant des faces supérieure
et inférieure du boîtier-chargeur 1 sont équipées
chacune d'un profilé de glissement ici sous forme
d'une nervure longitudinale axiale 25 ou 25' et
présentent chacune un moyen de positionnement
réalisé sous forme d'une échancrure triangulaire
26 ou 26' pratiquée symétriquement par rapport à
la nervure et dont la base aboutit sur la face avant
du boîtier-chargeur. Bien que non représenté, on
comprendra aisément que ces nervures 25 et 25'
peuvent être utilisées pour la mise en place de la
tête de câble optique entre deux supports équipés
de glissières, tandis que ces échancrures 26 et 26'
servent de pièges pour des ergots portés par les
supports sur lesquels ils sont alignés avec les
glissières et assurent alors le positionnement
final de la tête de câble sur ces supports. Cette
tête de câble sera fixée définitivement sur un bâti,
poutre, cadre ou analogue, portant les supports,
par vis montées par exemple dans des pattes de
fixation telles que 27 ici portées par la partie
arrière de l'une des grandes faces latérales.

De la figure 1 et la figure 6, on voit également que la moitié arrière des faces supérieure et inférieure du boîtier-chargeur 1, représentées non recouvertes par les plaques de fond et de dessus 12' et 12, présentent chacune une nervure centrale en V28 ou 28', à pointe orientée vers la face arrière 1B du boîtier-chargeur. Chacune de ces nervures en V28 et 28' matérialise de part et d'autre d'elle sous la plaque 12 ou 12' qui la coiffe, deux chemins séparés pour l'un et l'autre de deux ensembles de cinq fibres individuelles 55 qui pénètrent dans les deux ouïes latérales 17 et 17' du boîtier-chargeur 1.

Dans la figure 6 également, dans laquelle l'une des pattes de fixation 27 a été représentée en coupe, on voit que cette patte porte le logement 29 pour une vis d'accrochage sur un bâti, une poutre ou un cadre extérieur.

En regard du support de connecteur optique 3 représenté dans les figures 7 à 11, on voit que le doigt creux 30 est constitué par une lamelle rigide, de préférence métallique, repliée en U très allongé.

La pièce de raccordement 31 est montée sur la base de U qu'elle traverse en débordant intérieurement et extérieurement du doigt pour l'enfichage de l'embout 56 de la fibre 55 à l'intérieur du doigt et l'enfichage d'un autre embout analogue d'une fibre extérieure, non illustrée, à raccorder à la fibre 55. Cette pièce de raccordement 31 est solidarisée au doigt par mise en butée sur la face extérieure de la base du U d'une collerette intermédiaire 33 qu'elle présente et par blocage au moyen d'un écrou 34 vissé sur une portion intermédiaire filetée 35, intérieure au doigt, que présente la pièce 31 au voisinage de la collerette. Des trous tels que 30a (figure 11) sont réalisés sur la base de U du support de connecteur optique 3 afin de pouvoir monter une pièce de raccordement 31 d'une autre conception que celle représentée ici.

Le support de lovage 32 est constitué essentiellement par une plaque 40 ayant ici la forme d'un rectangle à angles et petits côtés arrondis ou la forme générale d'une ellipse aplatie sur son petit axe. Cette forme illustrée permet le lovage de la fibre reçue avec un rayon de courbure suffisant, compatible avec les exigences de transmission sur la fibre, et avec un encombrement minimal en hauteur sur le boîtier-chargeur. Bien entendu, en variante, ce support de lovage pourra être circulaire, le rayon de ce cercle devant respecter les exigences de transmission sur la fibre. En pratique, la forme de ce support de lovage sera issue d'un compromis réalisé entre son encombrement en hauteur, donc en définitive la hauteur du boîtier-chargeur, et sa facilité de réalisation, en général par moulage. On notera en regard de la forme circulaire possible de ce support de lovage que le boîtier-chargeur pourra dans ce cas être réduit en profondeur, c'est-à-dire selon la direction des cavités 10.

La plaque 40 est montée sur l'un des côtés du doigt, transversalement aux branches du U et sensiblement au niveau de leurs portions terminales. Elle est de hauteur maximale, correspondant à la longueur du petit axe de l'ellipse, voisine du double de la hauteur du doigt. Le support de lovage porte, sur la face de la plaque 40 tournée vers le doigt et dite face intérieure, deux pattes 36 et 37 venant l'une et l'autre s'insérer entre les branches du doigt profilée en U. Chacune de ces pattes permet d'assurer la fixation au moyen d'une paire de vis telles que 38 et 39, du support de lovage 32 sur l'une et l'autre des deux branches du doigt 30. Les portions de ces pattes, adjacentes à la plaque 40, forment également un chemin de glissement du support de connecteur optique sur l'un des bords longitudinaux de la fenêtre 19, 19' de la cavité qui reçoit ledit support.

Le support de lovage 32 est à bord 41 doublement rabattu sur la face extérieure au doigt 30 de la plaque 40. Ce bord 41 doublement rabattu est interrompu pour définir des languettes périphériques distinctes désignées par cette même référence 41, ménageant entre elles des accès périphériques possibles tels que 42, pour la fibre 55 venant de l'extérieur du support de connecteur optique en l'occurence de l'une des ouïes latérales du boîtier-chargeur 1 (figure 1). Ces languettes 41 assurent donc le maintien, quasiment sur la périphérie de la plaque 40, de la longueur voulue de fibre 55 reçue sur le support de lovage à travers l'un des accès 42, elles permettent aussi, un dégagement manuel aisé d'une partie de la longueur lovée, si nécessaire.

Ce support de lovage 32 présente aussi une fenêtre oblongue 43 pratiquée dans la plaque 40, constituant un autre accès pour la fibre 55, depuis la face extérieure de lovage de la fibre à la face intérieure en regard du doigt 30 et dans le doigt. Cette fenêtre 43 est positionnée en regard de l'espace intérieur entre les deux branches du doigt en U, elle est, ici, de largeur sensiblement égale à l'écartement entre ces deux branches. Avantageusement, de part et d'autre de la fenêtre des portions 41' ont été renforcées en épaisseur.

Pour le libre passage intérieur de la fibre 55 dans toute la longueur du doigt 30, la patte 36 de fixation du support, la plus intérieure dans le profilé en U du doigt, présente sur toute sa largeur une fente médiane 44. La portion terminale de la fibre 55, équipée de son embout de connexion 56 vient ainsi, à travers la fenêtre 43 et la fente 44 s'étendre jusqu'à la base du doigt en U pour l'enfichage de cet embout dans la pièce de raccordement 31.

Dans la réalisation illustrée, le support de lovage 32 est positionné sur le doigt pour ne venir déborder que très légèrement du niveau donné par l'une des branches du doigt mais pour venir déborder très largement au-delà du niveau donné par l'autre branche.

Bien entendu un positionnement différent de ce support de lovage sur le doigt pourra, en variante, être adopté.

Le support de connecteur optique 3 comporte, en outre, un moyen de verrouillage dans le boîtier-chargeur décrit ci-avant. Ce moyen de verrouillage est constitué par une vis imperdable 45 montée avec une entretoise cylindrique 45' dans un étrier 46. L'étrier est fixé sur l'extrémité de l'une des branches du doigt 30 profilé en U, dans l'exemple illustré, la branche se trouvant sensiblement selon l'axe longitudinal médian de la plaque 40. Cet étrier 46 avec sa vis imperdable 45 constituent les pièces terminales du support de connecteur optique, à l'opposé de la pièce de raccordement ; la branche du doigt qui porte cet étrier est donc légèrement plus longue que l'autre, son extrémité déborde sur la longueur du support de lovage 32. Sur l'extrémité de cette branche, l'étrier 46 est monté au voisinage du bord longitudinal opposé à celui en regard du support de lovage, un œil 47 est pratiqué au voisinage de l'autre bord longitudinal.

Le verrouillage du support de connecteur optique logé dans le boîtier-chargeur se fera par fixation de la vis 45 dans le trou taraudé correspondant 24 ou 24' de la pièce 21 (figures 2 et 4), l'autre trou taraudé de cette même pièce 21 recevant la vis de fixation de l'un des deux supports de connecteur optique adjacents. Le retrait d'un support de connecteur optique 3, après son déverrouillage de la pièce 21 sur laquelle il était fixé, se fait à l'aide d'un outil de préhension engagé dans l'œil 47.

Le support de connecteur optique 3 comporte, aussi, une ouverture 48 pratiquée dans l'une des branches du doigt 30, au voisinage de la base de son profilé en U. Ainsi qu'il apparaît dans la figure 12 tout particulièrement, cette découpe 48 coopère avec l'une des lames élastiques 23 et 23' portées par la pièce 21 rapportée en bout de la cloison 20 interrompue. Cette découpe 48 et la lame 23 concernée forment, au cours du retrait du support de connecteur optique 3 symbolisé par la flèche R, une butée d'arrêt juste avant le dégagement final du support de connecteur optique de sa cavité 10. Au droit de cette ouverture, la lame élastique 23 n'est plus sollicitée et s'y engage. Son extrémité en butée contre l'un des bords de l'ouverture s'oppose au retrait définitif qui sera alors effectué avec l'aide d'un outil dégageant la lame élastique de l'ouverture, par contre lors de la mise en place du support de connecteur optique dans sa cavité au fur et à mesure de l'avancement de ce support l'autre bord de l'ouverture 48 repousse la lame élastique contre la pièce 21 qui la porte, de manière qu'elle ne fasse plus obstacle à cet avancement.

Ce retrait aisé de l'un quelconque des supports de connecteur optique du boîtier chargeur, indépendamment des autres supports de connecteur optique permet le cas échéant, de venir effectuer une réparation sur l'un des supports de connecteur optique au niveau de son embout de connexion grâce à la réserve de fibre qu'il comporte, ceci sans manipulation à effectuer sur les autres supports de connecteur et donc sans interruption des liaisons établies sur lesdits supports.

La présente invention a été décrite en regard d'un mode de réalisation donné dans le dessin ci-annexé, il est évident que l'on pourra y apporter des modifications de détail ou remplacer certains moyens par d'autres équivalents sans pour autant sortir du cadre de l'invention.

## Revendications

1. Tête de câble optique destinée à permettre un raccordement optique sur les fibres individuelles d'un câble (5) optique, par assemblage d'un embout de connexion (56) monté sur chaque fibre de câble avec un autre embout de connexion d'une fibre extérieure, caractérisée en ce qu'elle comporte une pluralité de supports de connecteur optique (3) ayant chacun un corps allongé formé d'un doigt creux (30) équipé, à une extrémité, d'une pièce de raccordement optique (31) d'une paire d'embouts de connexion et flanqué d'un support de lovage (32) pour l'une des fibres (55) dudit câble (5) dont l'embout de connexion (56) est raccordé à l'intérieur du doigt à ladite pièce de raccordement (31), et un boîtier-chargeur (1) comportant une pluralité de cavités individuelles (10) pour chacun desdits supports de connecteur optique (3) dont les pièces de raccordement constituent, dans l'une de ses faces, dite face avant (1C), des prises optiques sur les fibres individuelles dudit câble.

2. Tête de câble optique selon la revendication 1, caractérisée en ce que ledit boîtier-chargeur (1) est formé par un corps principal (14) de forme parallélépipédique comportant intérieurement lesdites cavités (10) et comporte une rangée de fenêtres oblongues (19, 19') correspondant aux cavités successives (10), respectivement et, pratiquées depuis sa face arrière (1B) dans au moins l'une de ses grandes parois latérales, ouvrant latéralement chacune desdites cavités sur une partie de leur longueur.

3. Tête de câble optique selon la revendication 2, caractérisée en ce que pour chacun desdits supports de connecteur optique (3), ledit support de lovage (32) est formé essentiellement par une plaque (40), équipée sur sa périphérie de moyens d'accès (42) et de moyens de retenue (41) d'une longueur de fibre lovée, montée sur ledit doigt creux (30) non jointive et en débordant en hauteur sur ce doigt pour venir se positionner, à travers la fenêtre (19, 19') débouchant dans la cavité (10) recevant le support de connecteur optique (3) considéré, à l'extérieur dudit boîtier-chargeur.

4. Tête de câble optique selon la revendication 3, caractérisée par le fait que lesdites fenêtres (19, 19') sont pratiquées alternativement dans l'une et l'autre desdites grandes faces latérales dudit boîtier-chargeur (1).

5. Tête de câble optique selon la revendication 4, caractérisée par le fait que pour chacun desdits supports de connecteur optique (3), le support de lovage (32) occupe sur ledit boîtier-chargeur (1), perpendiculairement à la direction desdites cavités (10), une hauteur sensiblement double de celle de chacune des cavités, les supports de connecteur optique (3) reçus dans les cavités successives (10) étant alternativement retournés de 180°.

6. Tête de câble optique selon l'une des revendications 3 à 5, caractérisée par le fait que pour chacun des supports de connecteur optique, la fibre (55) est lovée sur la face de la plaque (40) opposée à celle en regard dudit doigt (30) et la plaque (40) comporte une fenêtre (43) pour le passage de la fibre (55) de la face de lovage à celle en regard du doigt (30).

7. Tête de câble optique selon l'une des revendications 3 à 6, caractérisée par le fait que pour chacun desdits supports de connecteur optique (3), le doigt (30) a une section en U allongé et la plaque (40) du support de lovage (32) est montée transversalement aux branches de U et porte des pattes (36, 37) s'étendant perpendiculairement à la plaque pour sa fixation sur les parties terminales des branches du U.

8. Tête de câble optique selon la revendication 7, caractérisée par le fait que chacun desdits supports de connecteur optique comporte un moyen de verrouillage (45) dans l'une des cavités du boîtier-chargeur (1), porté par l'extrémité de l'une des branches du doigt creux (30) de section en U.

9. Tête de câble optique selon l'une des revendications 3 à 8, caractérisée par le fait que ledit boîtier-chargeur (1) parallélépipédique est muni extérieurement de flasques latéraux (15, 16) s'étendant, non jointifs, depuis la face avant (1C) du boîtier-chargeur (1) et sur sa hauteur, sur une partie dite partie avant d'au moins l'une des grandes faces dudit corps principal (14), en ménageant une ouïe latérale (17, 17'), indépendante des cavités (10) sur au moins l'une de ces grandes faces, pour le libre logement des fibres individuelles (55) provenant du câble, reliées aux supports de connecteur optique respectifs (3) amovibles dans le boîtier-chargeur.

10. Tête de câble optique selon la revendication 9, caractérisée par le fait que ledit boîtier-chargeur (1) comporte des plaques (12, 12') de recouvrement partiel des faces supérieure et inférieure dudit corps principal, s'étendant sensiblement de sa face arrière (1B) au niveau de chaque flasque latéral (15, 16), chacune ménageant entre elle et la face qu'elle coiffe au moins un chemin débouchant dans l'ouïe latérale (17, 17') recevant les fibres individuelles.

11. Tête de câble optique selon la revendication 10, caractérisée par le fait que chacune des plaques de recouvrement partiel ·(12, 12') ou chacune des faces supérieure et inférieure du corps principal présente une nervure longitudinale (28, 28') en V à pointe orientée vers la face arrière (1B) du boîtier-chargeur (1), matérialisant de part et d'autre d'elle deux chemins distincts pour les fibres individuelles (55) du câble séparées en deux ensembles identiques (51, 52).

12. Tête de câble selon l'une des revendications 9 à 11, caractérisée par le fait que l'une des cloisons (20) de chacune des cavités (10) porte au voisinage de la face arrière du boîtier-chargeur (1), une lame élastique (23, 23') intérieure à la cavité concernée en l'absence de fiche et rabattue contre la cloison en présence de support de connecteur optique en place et que chacun desdits supports de connecteur optique (3) présente une ouverture (48) pratiquée dans son doigt creux (30) au voisinage de l'extrémité équipée de ladite pièce de raccordement (31) pour former un piège pour ladite lame élastique en constituant ainsi une butée d'arrêt de dégagement direct complet du support de connecteur optique hors de sa cavité sans pour autant s'opposer à son enfichage.

13. Tête de câble optique selon la revendication 12, caractérisée par le fait que dans le corps principal (14) les lames élastiques (23, 23') affectées aux différentes cavités successives respectivement sont montées par paire sur une pièce (21) rapportée, en bout du côté de la face arrière du boîtier-chargeur (1), sur chacune des cloisons (20) communes aux cavités successives (10) considérées deux par deux.

14. Tête de câble optique selon l'une des revendications 9 à 13, caractérisée par le fait que ledit boîtier-chargeur (1) comporte une rangée de guides externes (18) sur la partie avant d'au moins l'une de ses grandes faces latérales affectées au positionnement et maintien de boîtiers d'appareillage à raccorder sur les pièces de raccordement (31) des supports de connecteur optique (3).

15. Tête de câble optique selon l'une des revendications 9 à 14, caractérisée par le fait que ledit boîtier chargeur (1) comporte sur la partie avant de chacune de ses faces supérieure et inférieure, un profilé de glissement (25, 25') pour le montage de ladite tête entre deux supports fixes et un moyen de positionnement (26, 26') de ladite tête sur ces supports.

**Claims**

1. An optical cable head for allowing optical connections to the individual fibers of the optical cable (5) by bringing together connection end fittings (56) mounted on each cable fiber with other connection end fittings on an external fiber, characterized in that the head comprises : a plurality of optical connector supports (3) each having an elongate body in the form of a hollow finger (30) which is equipped at one end with an optical connector member (31) for interconnecting a pair of connection end fittings, and which is equipped on one side with a coil former (32) for receiving one of the fibers (55) of said cable (5) which has its end fitting (56) connected inside said finger to said connector member (31) ; and a magazine casing (1) comprising a plurality of individual cavities (10) for each of said optical connector supports (3) whose connector members constitute optical accesses to the individual fibers of said cable, said accesses being available in a « front » face (1C) of said magazine casing.

2. An optical cable head according to claim 1, characterized in that said magazine casing (1) comprises a parallelepiped shaped main body (14) with said cavities (10) inside and includes a row of oblong windows (19, 19') corresponding respectively to the successive cavities (10) and running from its rear face (1B) through at least one of its large side walls, and opening each of said cavities over a portion of their length.

3. An optical cable head according to claim 2, characterized in that for each of said optical connector supports (3), said coil former (32) is essentially constituted by a plate (40) having at its periphery access means (42) and retaining means (41) for retaining a length of coiled fiber, said plate being mounted on said hollow finger so as not to be immediately adjacent thereto and being of greater height than said finger so as to be located through the window (19, 19') opening into said cavity (10) in which the optical connector support (3) is received, outside said magazine casing.

4. An optical cable head according to claim 3, characterized in that said windows (19, 19') are made alternately through one and the other of the large side faces of the said magazine casing (1).

5. An optical cable head according to claim 4, characterized in that for each of said optical connector supports (3), the coil former (32) occupies, on said magazine casing (1), perpendicularly to the direction of said cavities (10), substantially twice the height of each cavity, the optical connector supports (3) received in successive cavities (10) being alternately turned through 180°.

6. An optical cable head according to one of claims 3 to 5, characterized in that for each optical connector support, the fiber (55) is coiled on the opposite face of the plate (40) to the face next to the finger (30), and the plate (40) includes a window (43) to pass the fiber (55) from the coiling face to the face next to the finger (30).

7. An optical cable head according to one of claims 3 to 6, characterized in that for each of said optical connector supports (3), the finger (30) has an elongate U-shaped cross section and the plate (40) of the coil former (32) is mounted across the two branches of the U and has lugs (36, 37) extending perpendicularly to the plate for fixing to the end portions of the branches of the U.

8. An optical cable head according to claim 7, characterized in that each of said optical connector supports includes locking means (45) for locking said support in one of the cavities of the magazine casing (1), said locking means being supported by the end of one of the branches of the hollow finger (30) with an U section.

9. An optical cable head according to one of claims 3 to 8, characterized in that said parallelepipedic magazine casing (1) is provided outside with side plates (15, 16) extending, at a distance, from the front face (1C) of the magazine casing (1) and over its height, over a « front » portion of at least one of the large faces of said main body (14), providing a side gill (17, 17') independent of the cavities (10) over at least one of said large faces, said gill loosely housing the individual fibers (55) coming from the cable and connected to respective removable optical connector supports (3) in the magazine casing.

10. An optical cable head according to claim 9, characterized in that said magazine casing (1) includes plates (12, 12') that partially cover the top and bottom faces of said main body, said plates extending substantially from said rear face (1B) up to each side plate (15, 16), each of said top and bottom plates leaving, between itself and the face it covers, at least one path leading to the side gill (17, 17') for receiving the individual fibers.

11. An optical cable head according to claim 10, characterized in that each of the partial cover plates (12, 12') or each of said top and bottom faces of the main body has a longitudinally extending tapering rib (28, 28') with the narrow end extending towards the rear face (1B) of the magazine casing (1), providing on either side thereof two distinct paths for individual fibers (55) of the cable separated into two identical sets (51, 52).

12. An optical cable head according to one of claims 9 to 11, characterized in that one of the partitions (20) of each cavity (10) is provided, close to the rear face of the magazine casing (1), with a resilient blade (23, 23') extending inside the cavity in question in the absence of a plug and pressed against the partition in the presence of an optical connector support in place, and that each of said optical connector supports (3) has an opening (48) through its hollow finger (30) near to the end fitted with said connector member (31) to form a trap for said resilient blade, thereby forming a stop for preventing the optical connector support from being directly fully withdrawn from its cavity, while not hindering insertion thereof.

13. An optical cable head according to claim 12, characterized in that the resilient blades (23, 23') attributed to successive different respective cavities in the main body (14) are mounted in pairs on an add-on part (21) placed at the end adjacent the rear face of the magazine casing (1) on each partition (20) common to the successive cavities (10) taken in pairs.

14. An optical cable head according to one of claims 9 to 13, characterized in that the magazine casing (1) includes a row of external guides (18) on the front part of at least one of its large side faces, said guides serving to position and hold equipment housings to be connected to the connector members (31) of the optical connector supports (3).

15. An optical cable head according to one of claims 9 to 14, characterized in that said magazine casing (1) includes, on the front portion of each of its top and bottom faces, a slide guide (25, 25') for mounting said head between two fixed supports, together with a positioning means (26, 26') for positioning said head relative to said supports.

**Patentansprüche**

1. Kopfstück eines Lichtleiterkabels zum optischen Anschluß eines Lichtleiterkabels (5) an einzelne Lichtleiter durch Zusammenfügen eines Verbindungsendstücks (56), das sich an jedem Lichtleiter des Kabels befindet, mit einem anderen Verbindungsendstück an einem äußeren Lichtleiter, dadurch gekennzeichnet, daß es eine Vielzahl von Trägern (3) für optische Verbinder aufweist, die je einen länglichen Körper in Form eines hohlen Fingers (30) haben, der an einem Ende ein optisches Anschlußelement (31) für ein Paar von Verbindungsendstücken trägt, und der von einem Wickelträger (32) für einen der Lichtleiter (55) des Kabels (9) flankiert ist, dessen Verbindungsendstück (56) im Inneren des Fingers an das Anschlußelement (31) angeschlossen ist, und daß der Kopf weiter ein Ladegehäuse (1) besitzt, das eine Vielzahl von individuellen Hohlräumen (10) für je einen der Träger (3) für optische Verbinder besitzt, deren Anschlußelemente mit einer ihrer Stirnseiten, Vorderseite (1C) genannt, optische Stecker für die einzelnen Lichtleiter des Kabels bilden.

2. Kopfstück eines Lichtleiterkabels nach Anspruch 1, dadurch gekennzeichnet, daß das Ladegehäuse (1) von einem parallelepipedisch geformten Hauptkörper (14) gebildet wird, der die genannten Hohlräume (10) im Inneren aufweist und der eine Reihe von länglichen Fenstern (19, 19') entsprechend den aufeinanderfolgenden Hohlräumen (10) besitzt, wobei die Fenster von der rückwärtigen Stirnseite (1B) in mindestens eine der großen Seitenwände eingebracht sind und über einen Teil ihrer Länge jeden dieser Hohlräume seitlich öffnen.

3. Kopfstück eines Lichtleiterkabels nach Anspruch 2, dadurch gekennzeichnet, daß für jeden der Träger (3) für optische Verbinder der Wickelträger (32) im wesentlichen aus einer Platte (40) besteht, die auf ihrem Umfang mit Zugangsmitteln (42) und Haltemitteln (41) für eine Länge der aufgewickelten Fasern versehen und auf dem hohlen Finger (30) mit Abstand montiert ist und in Höhenrichtung über den Finger vorsteht, so daß sie durch das in den den betrachteten Träger (3) für optische Verbinder aufnehmenden Hohlraum (10) mündende Fenster hindurch außerhalb des Ladegehäuses liegt.

4. Kopfstück eines Lichtleiterkabels nach Anspruch 3, dadurch gekennzeichnet, daß die Fenster (19, 19') abwechselnd in die eine und die andere der großen Seitenflächen des Ladegehäuses (1) eingeschnitten sind.

5. Kopfstück eines Lichtleiterkabels nach Anspruch 4, dadurch gekennzeichnet, daß für jeden der Träger (3) für optische Verbinder der Wickelträger (32) auf dem Ladegehäuse (1) senkrecht zur Richtung der Hohlräume (10) eine Höhe einnimmt, die im wesentlichen doppelt so groß wie die jedes Hohlraums ist, und daß die Träger (3) für optische Verbinder, die in die aufeinanderfolgenden Hohlräume (10) hineingesteckt werden, abwechselnd um 180° gedreht sind.

6. Kopfstück eines Lichtleiterkabels nach einem der Ansprüche 3 bis 5, dadurch gekennzeichnet, daß für jeden der Träger für optische Verbinder der Lichtleiter (55) auf der dem Finger (30) abgewandten Seite der Platte (40) aufgewickelt ist und daß die Platte (40) ein Fenster (43) für den Durchtritt des Lichtleiters (55) von der Wickelseite auf die Seite gegenüber dem Finger (30) aufweist.

7. Kopfstück eines Lichtleiterkabels nach einem der Ansprüche 3 bis 6, dadurch gekennzeichnet, daß für jeden der Träger (3) für optische Verbinder der Finger (30) einen Querschnitt in Form eines länglichen U besitzt und daß die Platte (40) des Winkelträgers (32) quer zu den Zweigen des U montiert ist und Füße (36, 37) trägt, die sich senkrecht zur Platte erstrecken und der Befestigung auf den Endbereichen der Zweige des U dienen.

8. Kopfstück eines Lichtleiterkabels nach Anspruch 7, dadurch gekennzeichnet, daß jeder der Träger für optische Verbinder ein Mittel (45) zur Verriegelung in einem der Hohlräume des Ladegehäuses (1) aufweist, das vom Ende eines der Zweige des hohlen Fingers (30) mit U-Querschnitt getragen wird.

9. Kopfstück eines Lichtleiterkabels nach einem der Ansprüche 3 bis 8, dadurch gekennzeichnet, daß das parallelepipedische Ladegehäuse (1) außen mit seitlichen Flanschen (15, 16) versehen ist, die sich mit einem gewissen Abstand von der Vorderseite (1C) des Ladegehäuses (1) und in dessen Höhe über einen Bereich, Vorderteil genannt, mindestens einer der großen Flächen des Hauptkörpers (14) erstrecken und einen seitlichen Kanal (17, 17') bilden, der von den Hohlräumen auf mindestens einer von dessen großen Seiten unabhängig ist, zur freien Aufnahme der einzelnen Lichtleiter (55) aus dem Kabel, die an die entsprechenden entfernbaren Träger (3) für optische Verbinder im Ladegehäuse angeschlossen sind.

10. Kopfstück eines Lichtleiterkabels nach Anspruch 9, dadurch gekennzeichnet, daß das Ladegehäuse (1) Platten (12, 12') zur partiellen Abdeckung der oberen und unteren Seiten des Hauptkörpers aufweist, die sich im wesentlichen von der Rückseite (1B) bis in Höhe jedes seitlichen Flansches (15, 16) erstrecken und je zwischen sich und der Seite, die sie überdecken, mindestens einen Kanal definieren, der in den seitlichen Kanal (17, 17') zur Aufnahme der einzelnen Lichtleiter mündet.

11. Kopfstück eines Lichtleiterkabels nach Anspruch 10, dadurch gekennzeichnet, daß jede der Platten zum partiellen Abdecken (12, 12') oder jede der Oberseiten und Unterseiten des Hauptkörpers eine Längsrippe (28, 28') in V-Form mit zur Rückseite (1D) des Ladegehäuses (1) gerichteter Spitze aufweist, die zu ihren beiden Seiten zwei getrennte Wege für die einzelnen Lichtleiter (55) des Kabels bildet, die in zwei identische Untergruppen (51, 52) aufgeteilt sind.

12. Kopfstück eines Lichtleiterkabels nach einem der Ansprüche 9 bis 11, dadurch gekennzeichnet, daß eine Trennwand (22) jedes der Hohlräume (10) in der Nähe der hinteren Seite des Ladegehäuses (1) ein elastisches Blättchen (23, 23') trägt, das sich in Abwesenheit eines Steckers im Inneren des betrachteten Hohlraums befindet und in Anwesenheit eines Trägers für optische Verbinder an seinem Platz gegen die Trennwand angedrückt wird, und daß jeder der Träger (3) für optische Verbinder eine Öffnung (48) in seinem hohlen Finger (30) in der Nähe des mit dem Anschlußelement (31) ausgerüsteten Endes besitzt, um eine Falle für das elastische Blättchen zu bilden, indem sie einen Halteanschlag für die direkte und vollständige Freigabe des Trägers für optische Verbinder aus dem Hohlraum bildet, ohne sich jedoch dem Einstecken zu widersetzen.

13. Kopfstück eines Lichtleiterkabels nach Anspruch 12, dadurch gekennzeichnet, daß im Hauptkörper (14) die elastischen Blättchen (23, 23'), die den verschiedenen aufeinanderfolgenden Hohlräumen zugeordnet sind, paarweise auf einem Bauteil (21) montiert sind, das am Ende auf seiten der Rückseite des Ladegehäuses (1) auf jede der den aufeinanderfolgenden paarweise betrachteten Hohlräumen (10) gemeinsamen Trennwände (20) aufgebracht ist.

14. Kopfstück eines Lichtleiterkabels nach einem der Ansprüche 9 bis 13, dadurch gekennzeichnet, daß das Ladegehäuse (1) eine Reihe von äußeren Führungselementen (18) im vorderen Bereich mindestens einer der großen Seitenflächen besitzt, die der Positionierung und Halterung von Gerätegehäusen dienen, die auf die Anschlußelemente (31) der Träger (3) für optische Verbinder aufgebracht werden können.

15. Kopfstück eines Lichtleiterkabels nach einem der Ansprüche 9 bis 14, dadurch gekennzeichnet, daß das Ladegehäuse (1) in seinem vorderen Bereich der Oberseite und der Unterseite eine Gleitschiene (25, 25') für die Montage des Kopfstücks zwischen zwei festen Trägern und ein Positioniermittel (26, 26') für das Kopfstück auf diesen Trägern besitzt.

# FIG.1

# FIG.2

# FIG.3

# FIG.4

0 101 970

# FIG.5

# FIG.6

# FIG.7

FIG.8

FIG.9

FIG.10

FIG.11

# FIG.12

0 101 970